# EUROPEAN PATENT SPECIFICATION

(11) **EP 4 340 510 B1**
(45) Date of publication and mention of the grant of the patent: **04.11.2026**
(21) Application number: 22814877.1
(22) Date of filing: 12.04.2022
(51) Int. Cl.: H04W 4/40, H04W 4/70, H04W 72/02, H04W 72/542, H04W 72/25, H04W 72/40

(54) **RESOURCE SELECTION METHOD AND APPARATUS**
RESSOURCENAUSWAHLVERFAHREN UND -VORRICHTUNG
PROCÉDÉ ET APPAREIL DE SÉLECTION DE RESSOURCE

(30) Priority: 04.06.2021 CN 202110622490; 14.07.2021 CN 202110793953
(43) Date of publication of application: 20.03.2024
(73) Proprietor: Huawei Technologies Co., Ltd., Longgang Shenzhen, Guangdong 518129 (CN)
(72) Inventor: YANG, Yizhou, Shenzhen, Guangdong 518129 (CN); WANG, Bichai, Shenzhen, Guangdong 518129 (CN); LI, Xueru, Shenzhen, Guangdong 518129 (CN)
(74) Representative: Epping - Hermann - Fischer
(86) International application number: PCT/CN2022/086270
(87) International publication number: WO 2022/252830

(56) References cited:
- EP-A1- 4 064 772
- WO-A1-2020/064840
- WO-A1-2021/040383
- CN-A- 111 277 949
- CN-A- 111 436 140
- CN-A- 112 822 777
- CN-A- 113 950 030
- US-A1- 2021 212 044
- US-A1- 2022 361 111
- "3rd Generation Partnership Project; Technical Specification Group Radio Access Network; NR; Study on NR Vehicle-to-Everything (V2X) (Release 16)", 3GPP STANDARD; TECHNICAL REPORT; 3GPP TR 38.885, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 28 March 2019 (2019-03-28), pages 1 - 122, XP051723188
- HUAWEI, HISILICON: "Power control and power sharing for V2X sidelink", 3GPP DRAFT; R1-1906598, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20190513 - 20190517, 3 May 2019 (2019-05-03), Mobile Competence Centre ; 650, route des Lucioles ; F-06921 Sophia-Antipolis Cedex ; France , XP051708634

## Description

### TECHNICAL FIELD

This application relates to the communication field, and more specifically, to a resource selection method and apparatus.

### BACKGROUND

Sidelink (sidelink, SL) communication can support direct communication between terminal devices, that is, user data is directly transmitted between the terminal devices. This can prevent the user data from being transferred and transmitted through a network in cellular communication, so that a transmission delay can be reduced, and a network load can be relieved.

Currently, based on a mechanism in which a plurality of sidelink devices run in a unit of a group (Group), a delay can be reduced, resource allocation efficiency can be improved, and interference of different SL transmission can be reduced. In the mechanism in which running is performed in the unit of the group, resources between groups need to be obtained through contention or negotiation for the entire groups by using group headers (group headers, GHs). However, because locations of the GHs are different, results of the resources obtained through contention are greatly different. When the GH allocates group SL transmission resources, some resources are not necessarily suitable for a group member (group member, GM) of the group, and impact of inter-group interference may exist in the resources allocated by the GH. In addition, if periodic service transmission is mainly used in SL transmission, existence of such interference greatly affects communication performance.

Therefore, a resource selection method is urgently needed, to improve an anti-interference capability of a communication system and ensure relatively low energy consumption overheads.

"3rd Generation Partnership Project; Technical Specification Group Radio Access Network; NR; Study on NR Vehicle-to-Everything (V2X) (Release 16)", 3GPP STANDARD; TECHNICAL REPORT; 3GPP TR 38.885, captures the findings of the study item, "Study on NR Vehicle-to-Everything". The purpose of this TR is to is to study how to support advanced V2X use cases, among other matters. However, this does not imply that NR V2X capability is necessarily restricted to advanced services. It is up to the regional regulators and the stakeholders involved (i.e. car OEMs and the automotive ecosystem in general) to decide on the technology of choice for the services and use cases. This document addresses NR SL design for V2X; Uu enhancements for advanced V2X use cases; Uu-based SL resource allocation/configuration by LTE and NR; RAT and interface selection; QoS management; and non-cochannel coexistence between NR and LTE SLs. The study addresses unlicensed ITS bands and licensed bands in FR1 and FR2, up to 52.6 GHz.
CN 112 822 777 A provides a resource selection method and a terminal. The resource selection method includes: triggering a resource selection re-evaluation based on a trigger condition, and performing the resource selection re-evaluation to obtain a re-evaluation result; and performing a resource reselection based on the re-evaluation result.

### SUMMARY

This application provides a resource selection method and apparatus as defined in the claims, to help improve an anti-interference capability of a communication system and reduce energy consumption overheads.

According to a first aspect, a resource selection method is provided, including: A first terminal device receives first indication information from a second terminal device, where the first indication information indicates quality of SL transmission between the first terminal device and the second terminal device on a first resource, and the first resource is a resource indicated by a third terminal device; and the first terminal device determines that a quantity of times the first indication information meets a preset condition is greater than or equal to a preset value, and selects a second resource, where the second resource is different from the first resource.

According to the technical solution of this application, the preset condition is set, and resource selection is performed when link interference is large, to help improve an anti-interference capability of a communication system; and when link quality is good, there is no need to perform resource selection, which reduces energy consumption overheads.

With reference to the first aspect, in some implementations of the first aspect, that the first indication information meets a preset condition includes at least one of the following: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

With reference to the first aspect, in some implementations of the first aspect, the method further includes: The first terminal device sends second indication information to the second terminal device. The second indication information indicates a periodicity and/or a resource for sending the CQI by the second terminal device, or the second indication information indicates a periodicity and/or a resource for sending the RSRP by the second terminal device.

With reference to the first aspect, in some implementations of the first aspect, that the first terminal device selects a second resource includes: The first terminal device determines a first resource sensing window and a first resource selection window; the first terminal device determines a candidate resource set in the first resource selection window based on a sensing result in the first resource sensing window, where the sensing result indicates a usage and/or reservation status of a resource in the first resource selection window; and the first terminal device determines the second resource from the candidate resource set.

With reference to the first aspect, in some implementations of the first aspect, the method further includes: The first terminal device receives resource information from the third terminal device, where the resource information includes a usage and/or reservation status of a resource that is in the first resource selection window and that is not configured for the first terminal device; and that the first terminal device determines a candidate resource set in the first resource selection window based on a sensing result in the first resource sensing window includes: The first terminal device determines the candidate resource set in the first resource selection window based on the sensing result and the resource information.

With reference to the first aspect, in some implementations of the first aspect, the method further includes: The first terminal device performs SL transmission with the second terminal device on the second resource.

With reference to the first aspect, in some implementations of the first aspect, the method further includes: The first terminal device sends third indication information to the third terminal device. The third indication information indicates that the first terminal device performs SL transmission with the second terminal device on the second resource.

With reference to the first aspect, in some implementations of the first aspect, the first terminal device and the third terminal device belong to a first SL device group.

According to a second aspect, a resource selection method is provided, including: A second terminal device sends first indication information to a first terminal device, where the first indication information indicates quality of SL transmission between the first terminal device and the second terminal device on a first resource, and the first resource is a resource indicated by a third terminal device; and the second terminal device performs SL transmission with the first terminal device on a second resource, where the second resource is a resource selected after the first terminal device determines that a quantity of times the first indication information meets a preset condition is greater than or equal to a preset value, and the second resource is different from the first resource.

According to the technical solution of this application, the preset condition is set, and resource selection is performed when link interference is large, to help improve an anti-interference capability of a communication system; and when link quality is good, there is no need to perform resource selection, which reduces energy consumption overheads.

With reference to the second aspect, in some implementations of the second aspect, that the first indication information meets a preset condition includes at least one of the following: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

With reference to the second aspect, in some implementations of the second aspect, the method further includes: The second terminal device obtains second indication information. The second indication information indicates a periodicity and/or a resource for sending the CQI by the second terminal device, or the second indication information indicates a periodicity and/or a resource for sending the RSRP by the second terminal device.

With reference to the second aspect, in some implementations of the second aspect, that the second terminal device obtains second indication information includes: The second terminal device obtains the second indication information from the first terminal device; or the second terminal device obtains the second indication information from the third terminal device; or the second terminal device obtains preconfigured second indication information.

According to a third aspect, a resource selection method is provided, including: A third terminal device sends first information to a first terminal device, where the first information indicates a first resource, and the first resource is used by the first terminal device to perform SL transmission with a second terminal device; and the third terminal device receives third indication information from the first terminal device, where the third indication information indicates that the first terminal device performs SL transmission with the second terminal device on a second resource, the second resource is a resource selected after the first terminal device determines that a quantity of times first indication information meets a preset condition is greater than or equal to a preset value, the first indication information indicates quality of the SL transmission between the first terminal device and the second terminal device on the first resource, and the second resource is different from the first resource.

According to the technical solution of this application, the preset condition is set, and resource selection is performed when link interference is large, to help improve an anti-interference capability of a communication system; and when link quality is good, there is no need to perform resource selection, which reduces energy consumption overheads.

With reference to the third aspect, in some implementations of the third aspect, the method further includes: The third terminal device sends second indication information to the second terminal device. The second indication information indicates a periodicity and/or a resource for sending a CQI by the second terminal device, or the second indication information indicates a periodicity and/or a resource for sending an RSRP by the second terminal device.

With reference to the third aspect, in some implementations of the third aspect, the method further includes: The third terminal device sends resource information to the first terminal device. The resource information includes a usage and/or reservation status of a resource that is in a first resource selection window and that is not configured for the first terminal device. The first resource selection window is determined by the first terminal device.

With reference to the third aspect, in some implementations of the third aspect, the third terminal device and the first terminal device belong to a first SL device group.

According to a fourth aspect, a resource selection apparatus is provided, including: a transceiver unit, configured to receive first indication information from a second terminal device, where the first indication information indicates quality of sidelink SL transmission between a first terminal device and the second terminal device on a first resource, and the first resource is a resource indicated by a third terminal device; and a processing unit, configured to: determine that a quantity of times the first indication information meets a preset condition is greater than or equal to a preset value, and select a second resource, where the second resource is different from the first resource.

With reference to the fourth aspect, in some implementations of the fourth aspect, that the first indication information meets a preset condition includes at least one of the following: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

With reference to the fourth aspect, in some implementations of the fourth aspect, the transceiver unit is further configured to send second indication information to the second terminal device. The second indication information indicates a periodicity and/or a resource for sending the CQI by the second terminal device, or the second indication information indicates a periodicity and/or a resource for sending the RSRP by the second terminal device.

With reference to the fourth aspect, in some implementations of the fourth aspect, the processing unit is specifically configured to: determine a first resource sensing window and a first resource selection window; determine a candidate resource set in the first resource selection window based on a sensing result in the first resource sensing window, where the sensing result indicates a usage and/or reservation status of a resource in the first resource selection window; and determine the second resource from the candidate resource set.

With reference to the fourth aspect, in some implementations of the fourth aspect, the transceiver unit is further configured to receive resource information from the third terminal device, where the resource information includes a usage and/or reservation status of a resource that is in the first resource selection window and that is not configured for the first terminal device; and the processing unit is specifically configured to determine the candidate resource set in the first resource selection window based on the sensing result and the resource information.

With reference to the fourth aspect, in some implementations of the fourth aspect, the transceiver unit is further configured to perform SL transmission with the second terminal device on the second resource.

With reference to the fourth aspect, in some implementations of the fourth aspect, the transceiver unit is further configured to send third indication information to the third terminal device. The third indication information indicates that the first terminal device performs SL transmission with the second terminal device on the second resource.

With reference to the fourth aspect, in some implementations of the fourth aspect, the first terminal device and the third terminal device belong to a first SL device group.

According to a fifth aspect, a resource selection apparatus is provided, including: a transceiver unit, configured to send first indication information to a first terminal device, where the first indication information indicates quality of SL transmission between the first terminal device and a second terminal device on a first resource, and the first resource is a resource indicated by a third terminal device; and the transceiver unit is further configured to perform SL transmission with the first terminal device on a second resource, where the second resource is a resource selected after the first terminal device determines that a quantity of times the first indication information meets a preset condition is greater than or equal to a preset value, and the second resource is different from the first resource.

With reference to the fifth aspect, in some implementations of the fifth aspect, that the first indication information meets a preset condition includes at least one of the following: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

With reference to the fifth aspect, in some implementations of the fifth aspect, the transceiver unit is further configured to obtain second indication information. The second indication information indicates a periodicity and/or a resource for sending the CQI by the second terminal device, or the second indication information indicates a periodicity and/or a resource for sending the RSRP by the second terminal device.

With reference to the fifth aspect, in some implementations of the fifth aspect, the transceiver unit is specifically configured to: obtain the second indication information from the first terminal device; or obtain the second indication information from the third terminal device; or obtain preconfigured second indication information.

According to a sixth aspect, a resource selection apparatus is provided, including: a transceiver unit, configured to send first information to a first terminal device, where the first information indicates a first resource, and the first resource is used by the first terminal device to perform SL transmission with a second terminal device; and the transceiver unit is further configured to receive third indication information from the first terminal device, where the third indication information indicates that the first terminal device performs SL transmission with the second terminal device on a second resource, the second resource is a resource selected after the first terminal device determines that a quantity of times first indication information meets a preset condition is greater than or equal to a preset value, the first indication information indicates quality of the SL transmission between the first terminal device and the second terminal device on the first resource, and the second resource is different from the first resource.

With reference to the sixth aspect, in some implementations of the sixth aspect, the transceiver unit is further configured to send second indication information to the second terminal device. The second indication information indicates a periodicity and/or a resource for sending a CQI by the second terminal device, or the second indication information indicates a periodicity and/or a resource for sending an RSRP by the second terminal device.

With reference to the sixth aspect, in some implementations of the sixth aspect, the transceiver unit is further configured to send resource information to the first terminal device. The resource information includes a usage and/or reservation status of a resource that is in a first resource selection window and that is not configured for the first terminal device. The first resource selection window is determined by the first terminal device.

With reference to the sixth aspect, in some implementations of the sixth aspect, the third terminal device and the first terminal device belong to a first SL device group.

According to a seventh aspect, a communication apparatus is provided, including: a processor. The processor is coupled to a memory. The memory is configured to store a program or instructions. When the processor executes the program or the instructions, the apparatus is enabled to implement the method in any one of the first aspect to the third aspect and the implementations of the first aspect to the third aspect.

Optionally, there are one or more processors, and there are one or more memories.

Optionally, the memory may be integrated with the processor, or the memory may be disposed separately from the processor.

According to an eighth aspect, a communication system is provided, including a first terminal device, a second terminal device, and a third terminal device.

The first terminal device is configured to implement the method in the implementations of the first aspect. The second terminal device is configured to implement the method in the implementations of the second aspect. The third terminal device is configured to implement the method in the implementations of the third aspect.

**In** a possible design, the communication system further includes another device that interacts with the terminal devices in the solutions provided in embodiments of this application.

According to a ninth aspect, a computer program product is provided. The computer program product includes a computer program or instructions. When the computer program is run on a computer or the instructions are executed on a computer, the computer is enabled to perform the methods in the foregoing aspects.

It should be noted that all or some of the computer program or the instructions may be stored in a first storage medium. The first storage medium may be encapsulated together with a processor, or may be encapsulated separately from a processor. This is not specifically limited in this embodiment of this application.

According to a tenth aspect, a computer-readable medium is provided. The computer-readable medium stores a computer program or instructions. When the computer program is run on a computer or the instructions are executed on a computer, the computer is enabled to perform the methods in the foregoing aspects.

According to an eleventh aspect, a chip system is provided, including a memory and a processor. The memory is configured to store a computer program. The processor is configured to: invoke the computer program from the memory, and run the computer program, to enable a communication device in which the chip system is installed to perform the method in any one of the first aspect to the third aspect and the possible implementations of the first aspect to the third aspect.

The chip system may include an input chip or interface configured to send information or data, and an output chip or interface configured to receive information or data.

### BRIEF DESCRIPTION OF DRAWINGS

FIG. 1 is a schematic diagram of a communication system 100 to which this application is applicable;
FIG. 2 is a schematic diagram of a scenario 200 to which this application is applicable;
FIG. 3 is a schematic flowchart of a resource selection method according to this application;
FIG. 4 is a schematic flowchart of a specific example of a resource selection method according to this application;
FIG. 5 is a schematic diagram of performing resource selection in a candidate resource set according to this application;
FIG. 6 is a schematic flowchart of another specific example of a resource selection method according to this application;
FIG. 7 is a schematic block diagram of a resource selection device according to this application; and
FIG. 8 is a schematic block diagram of a resource selection apparatus according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) wireless/mobile communication system or a new radio (new radio, NR) communication system, and a future wireless/mobile communication system.

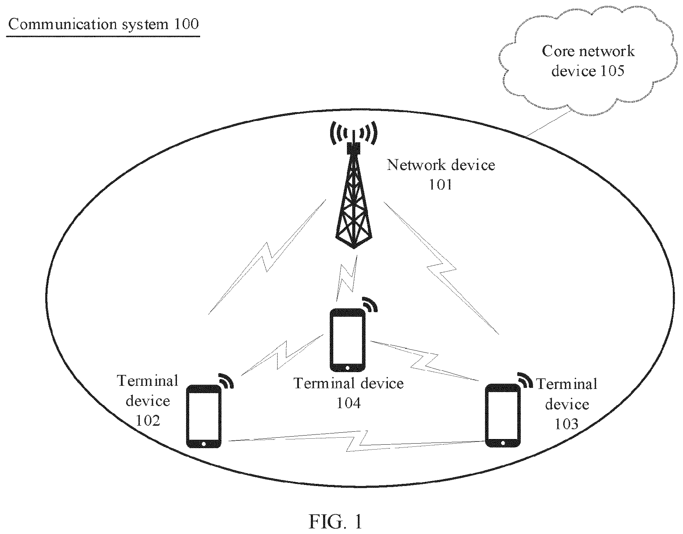

FIG. 1 is a schematic diagram of a wireless/mobile communication system 100 to which an embodiment of this application is applicable. As shown in FIG. 1, the wireless communication system 100 may include one or more network devices, for example, a network device 101 shown in FIG. 1. The wireless communication system 100 may further include one or more terminal devices (which may also be referred to as user equipment (user equipment, UE)), for example, a terminal device 102, a terminal device 103, and a terminal device 104 that are shown in FIG. 1. The terminal device 102, the terminal device 103, and the terminal device 104 may communicate with each other.

It should be understood that FIG. 1 is merely a schematic diagram. The communication system may further include another network device, for example, may further include a core network device 105, and a wireless relay device and a wireless backhaul device that are not shown in FIG. 1. Quantities of network devices and terminal devices included in the wireless/mobile communication system are not limited in embodiments of this application.

In the wireless/mobile communication system 100, the terminal device 102 and the terminal device 103 in this embodiment of this application may also be referred to as a terminal, a terminal device, a mobile station (mobile station, MS), a mobile terminal (mobile terminal, MT), or the like. The terminal device in this embodiment of this application may be a mobile phone (mobile phone), a tablet computer (Pad), or a computer with a wireless receiving/transmitting function, or may be a wireless terminal used in scenarios such as virtual reality (virtual reality, VR), augmented reality (augmented reality, AR), industrial control (industrial control), self driving (self driving), telemedicine (telemedicine), a smart grid (smart grid), transportation safety (transportation safety), a smart city (smart city), a smart home (smart home), and the like. In this application, the terminal device and a chip that can be used in the terminal device are collectively referred to as a terminal device. It should be understood that a specific technology used by and a specific device form of the terminal device are not limited in embodiments of this application.

The network device 101 in this embodiment of this application may be a device configured to communicate with the terminal device. The network device may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB in an NR system. Alternatively, the network device 101 may be a component or a part of a device that is included in the base station, for example, a central unit (central unit, CU), a distributed unit (distributed unit, DU), or a baseband unit (baseband unit, BBU). It should be understood that a specific technology used by and a specific device form of the network device are not limited in embodiments of this application. In this application, the network device may be the network device itself, or may be a chip used in the network device to complete a wireless communication processing function.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system, or a future evolved communication system, for example, a 6th generation (6th generation, 6G) system, vehicle-to-everything (vehicle-to-everything, V2X), where V2X may include vehicle to the network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (long term evolution-vehicle, LTE-V), the internet of vehicles, machine type communication (machine type communication, MTC), the internet of things (Internet of things, IoT), long term evolution-machine (long term evolution-machine, LTE-M), machine to machine (machine to machine, M2M), device to device (device to device, D2D), and the like.

The communication system may be based on downlink (downlink, DL) communication and uplink (uplink, UL) communication in a network. Different from the DL communication and the UL communication, SL communication may support direct communication between terminal devices, that is, user data is directly transmitted between a terminal device (for example, a receiving terminal device (receiving terminal UE, Rx UE)) and a terminal device (for example, a transmitting terminal device (transmitting terminal UE, Tx UE)). This can prevent the user data from being transferred and transmitted through a network in cellular communication, so that a transmission delay can be reduced, and a network load can be relieved.

SL includes two resource allocation modes: one is a network control mode, to be specific, an SL communication resource may be scheduled by a base station; and the other is a distributed mode, to be specific, a terminal device may autonomously select an SL communication resource from a preconfigured SL resource pool. For a terminal device within cellular coverage, the network control mode and/or the distributed mode may be used; and for a terminal device outside the cellular coverage, the distributed mode may be used.

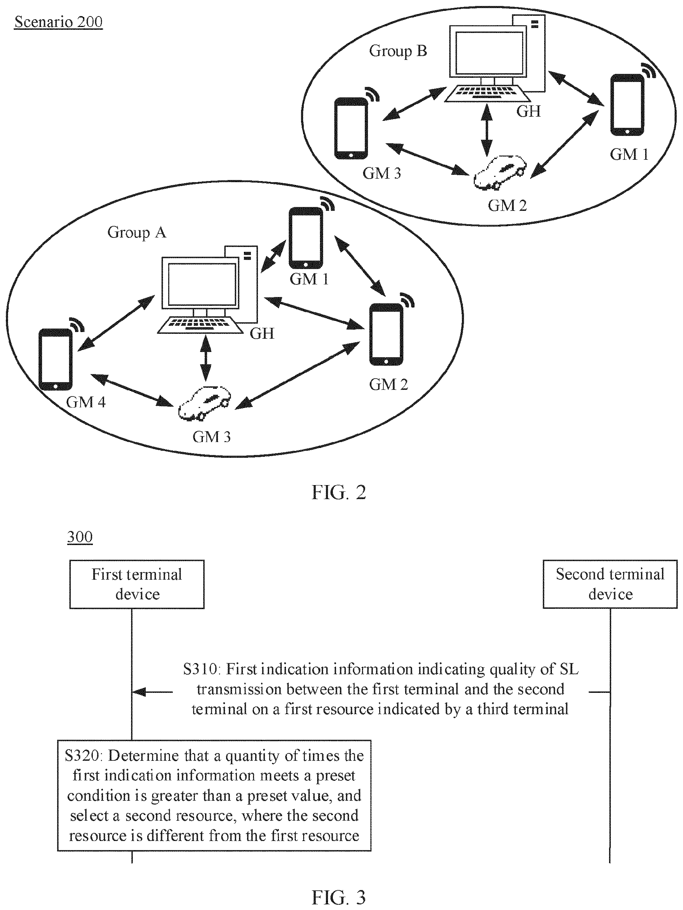

Currently, based on a mechanism in which a plurality of sidelink devices run in a unit of a group (Group), a delay can be reduced, resource allocation efficiency can be improved, and interference caused by transmission of different SLs can be reduced. In the mechanism in which running is performed in the unit of the group, resources between groups need to be obtained through contention or negotiation for the entire groups by using group headers (group headers, GHs). However, because locations of the GHs are different, results of the resources obtained through contention are greatly different. When the GH allocates group SL transmission resources, some resources are not necessarily suitable for a group member (group member, GM) of the group, and a problem of inter-group interference may exist in the resources allocated by the GH. In addition, if periodic service transmission is mainly used in SL transmission, existence of such interference greatly affects communication performance. For example, in a scenario shown in FIG. 2, a group A is far away from a group B, and a GH of the group A may consider that interference of the group B to the group A is very small. Therefore, a resource that overlaps with SL transmission in the group B may be allocated to SL transmission in the group A. However, a GM 1 and a GM 2 in the group A are very close to the group B. When the GM 1 and the GM 2 perform SL communication, if the resource that overlaps with a resource of the group B and that is allocated by the GH of the group A is used, severe inter-group interference may occur, resulting in poor performance of edge UEs.

In addition, in a distributed resource allocation process based on resource sensing, the Tx UE determines, through the resource sensing process, a resource reserved by another UE, and performs interference avoidance. The Tx UE needs to continuously receive data. When a resource selection process is triggered, the Tx UE needs to blindly detect a physical sidelink control channel (physical sidelink control channel, PSCCH) in a resource sensing window (sensing window) to obtain a resource sensing result, and determine, based on the resource sensing result, a resource reservation status in a future period of time, namely, a resource selection window (selection window), to exclude an unavailable candidate resource in the resource selection window. Finally, a transmission resource is (re)selected from a candidate resource set.

However, all Tx UEs continuously receive or blindly detect PSCCHs transmitted by other UEs to perform resource sensing, which is not conducive to saving energy consumption of the UEs.

Based on this, this application provides a resource selection method, to help improve an anti-interference capability of a communication system and reduce energy consumption overheads.

The following describes embodiments of this application by using interaction between a first terminal device (which may be briefly referred to as a first terminal, for example, a terminal device 102), a second terminal device (which may be briefly referred to as a second terminal, for example, a terminal device 103), and a third terminal device (which may be briefly referred to as a third terminal, for example, a terminal device 104) as an example.

FIG. 3 is a schematic flowchart of a resource selection method according to this application.

S310: A first terminal device receives first indication information from a second terminal device. The first indication information indicates quality of sidelink SL transmission between the first terminal device and the second terminal device on a first resource. The first resource is a resource indicated by a third terminal device.

In this embodiment of this application, the quality of the SL transmission may be indicated by a channel quality indication (channel quality indication, CQI) or a reference signal received power (reference signal received power, RSRP), or may be indicated by a type of HARQ feedback information. For example, an acknowledgment (Acknowledgement, ACK) indicates that the quality of the SL transmission is relatively good or can meet a use requirement, and a negative-acknowledgment (Negative-Acknowledgment, NACK) indicates that the quality of the SL transmission quality is relatively poor or cannot meet a use requirement.

The first terminal device and the third terminal device belong to a first SL device group. The third terminal device may be a GH of the first SL device group. The first terminal device may be a GM of the first SL device group.

S320: The first terminal device determines that a quantity of times the first indication information meets a preset condition is greater than or equal to a preset value, and selects a second resource. The second resource is different from (or not the same as) the first resource.

That the first indication information meets a preset condition includes at least one of the following: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

Optionally, the method further includes: The first terminal device sends second indication information to the second terminal device. The second indication information indicates a periodicity and/or a resource for sending the CQI by the second terminal device, or the second indication information indicates a periodicity and/or a resource for sending the RSRP by the second terminal device.

That the first terminal device selects a second resource includes: The first terminal device determines a first resource sensing window and a first resource selection window; the first terminal device determines a candidate resource set in the first resource selection window based on a sensing result in the first resource sensing window, where the sensing result indicates a usage and/or reservation status of a resource in the first resource selection window; and the first terminal device determines the second resource from the candidate resource set.

Optionally, the method further includes: the first terminal device receives resource information from the third terminal device. The resource information includes a usage and/or reservation status of a resource that is in the first resource selection window and that is not configured for the first terminal device. That the first terminal device determines a candidate resource set in the first resource selection window based on a sensing result in the first resource sensing window includes: The first terminal device determines the candidate resource set in the first resource selection window based on the sensing result and the resource information.

Optionally, the method further includes: The first terminal device performs SL transmission with the second terminal device on the second resource.

Optionally, the method further includes: The first terminal device sends third indication information to the third terminal device. The third indication information indicates that the first terminal device performs the SL transmission with the second terminal device on the second resource.

According to the technical solution of this application, the preset condition is set, and resource selection is performed when link interference is large, to help improve an anti-interference capability of a communication system. When link quality is good, there is no need to perform resource selection, which helps reduce energy consumption overheads.

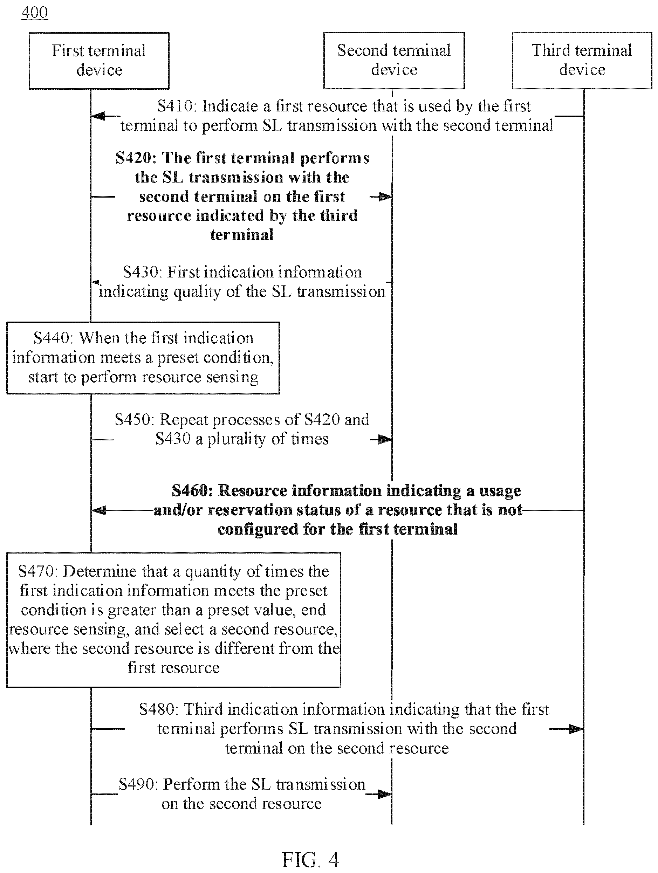

FIG. 4 is a schematic flowchart of a specific example of a resource selection method according to this application.

S410: A third terminal device indicates a first resource to a first terminal device, where the first resource is used by the first terminal device to perform SL transmission with a second terminal device.

The first terminal device and the third terminal device belong to a first SL device group.

Optionally, the third terminal device may be a GH of a first SL device group. The third terminal device may obtain a resource on behalf of a group member of the first SL device group or integrate resources that belong to the first SL device group, and (re)allocate the obtained resource or the integrated resource to the group member (for example, the first terminal device) of the first SL device group.

S420: The first terminal device performs the SL transmission with the second terminal device on the first resource.

The first terminal device is a sender, and the second terminal device is a receiver of the first terminal device.

S430: The second terminal device sends first indication information to the first terminal device. The first indication information may be HARQ feedback information and indicates quality of the SL transmission.

The HARQ feedback information includes an acknowledgment ACK and a negative-acknowledgment NACK.

S440: When the first indication information meets a preset condition, to be specific, when the first indication information is NCAK information, the first terminal device starts to perform resource sensing.

S450: S420 and S430 are performed repeatedly a plurality of times, that is, the first terminal device performs the SL transmission with the second terminal device a plurality of times on the first resource, and the second terminal device sends the first indication information to the first terminal device a plurality of times.

S460: The third terminal device sends resource information to the first terminal device. The resource information indicates a usage and/or reservation status of a resource that is not configured for the first terminal device.

The resource that is not configured for the first terminal device may include a resource configured for another member in the first SL device group, and may further include a resource of another terminal device beyond the first SL device group.

It should be understood that step S460 may be performed together with step S410, or may be performed after step S410. This is not limited in this application.

S470: The first terminal device determines that a quantity of times the first indication information meets the preset condition is greater than or equal to a preset value, ends resource sensing, and selects a second resource. The second resource is different from the first resource.

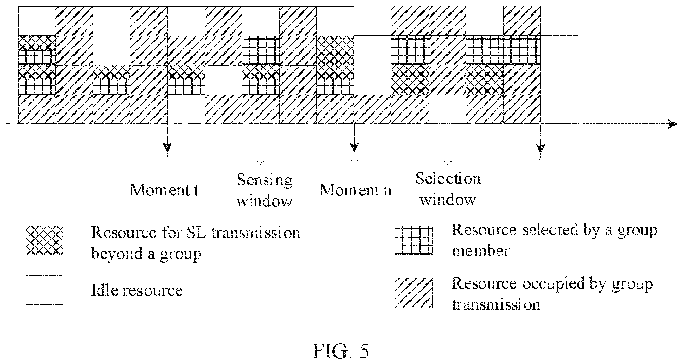

Specifically, as shown in FIG. 5, the first terminal device may define a first resource sensing window and a first resource selection window. A start moment of the first resource sensing window may be a moment t at which the first terminal device determines at the first time that the first indication information meets the preset condition. An end moment of the first resource sensing window may be a moment n at which the first terminal device determines that the quantity of times the first indication information meets the preset condition is greater than or equal to the preset value. A start moment of the first resource selection window follows the end moment of the first resource sensing window.

Within a time of the first resource sensing window, the first terminal device senses a resource, including decoding of control information and measurement of an RSRP, to obtain a sensing result. The sensing result indicates a usage and/or reservation status of a resource in the first resource selection window.

Optionally, the first terminal device may determine a candidate resource set in the first resource selection window based on the sensing result and the resource information.

Specifically, the first terminal device may learn of a transmission status of another terminal device (or group member) in the first SL device group based on the sensing result and the resource information. For a resource that is reserved by the another terminal device (or group member) in the group for SL transmission and that falls in the first resource selection window, it is considered that the resource is unavailable. If it is found that a resource used by the first terminal device for SL transmission in the first resource selection window overlaps (partially or fully) with a resource reserved by another terminal device (or group member), further determining is performed by measuring an RSRP value. If an RSRP measured on the overlapped resource is less than or equal to a preconfigured RSRP threshold, it is determined that the resource is unavailable. Optionally, if it is found that a resource used by the first terminal device for SL transmission in the first resource selection window overlaps with a resource reserved by another terminal device (or group member), it may also be directly determined that the resource is unavailable, and there is no need to measure the RSRP value for further determining. Therefore, an unavailable resource in the first resource selection window may be excluded, to obtain the candidate resource set.

Further, the first terminal device selects the second resource from the candidate resource set.

It should be understood that the first terminal device may alternatively determine the candidate resource set in the first resource selection window based on only the sensing result or only the resource information. This is not limited in this application.

Optionally, after the foregoing resource exclusion process, remaining available candidate resources in the first resource selection window are counted. If a quantity of remaining candidate resources is less than X% of a total quantity of resources in the first resource selection window, the preconfigured RSRP threshold may be properly reduced, to meet a requirement that the quantity of remaining candidate resources is greater than X% of the total quantity of resources in the first resource selection window. A value of X may be configured to 20, 35, 50, or the like based on a priority.

S480: The first terminal device sends third indication information to the third terminal device. The third indication information indicates that the first terminal device performs SL transmission with the second terminal device on the second resource.

In this way, the third terminal device may receive a resource selection or reservation status of the first terminal device, to allocate a resource to another terminal device in the first SL device group based on the resource selection or reservation status of the first terminal device, or send the resource selection or reservation status of the first terminal device to another terminal device in the first SL device group, to help the another terminal device further make a decision.

S490: The first terminal device performs the SL transmission with the second terminal device on the second resource.

According to the technical solution of this application, the preset condition is set, and resource selection is performed when link interference is large, to help improve an anti-interference capability of a communication system. When quality of link transmission is good, there is no need to perform resource selection, which helps reduce energy consumption overheads.

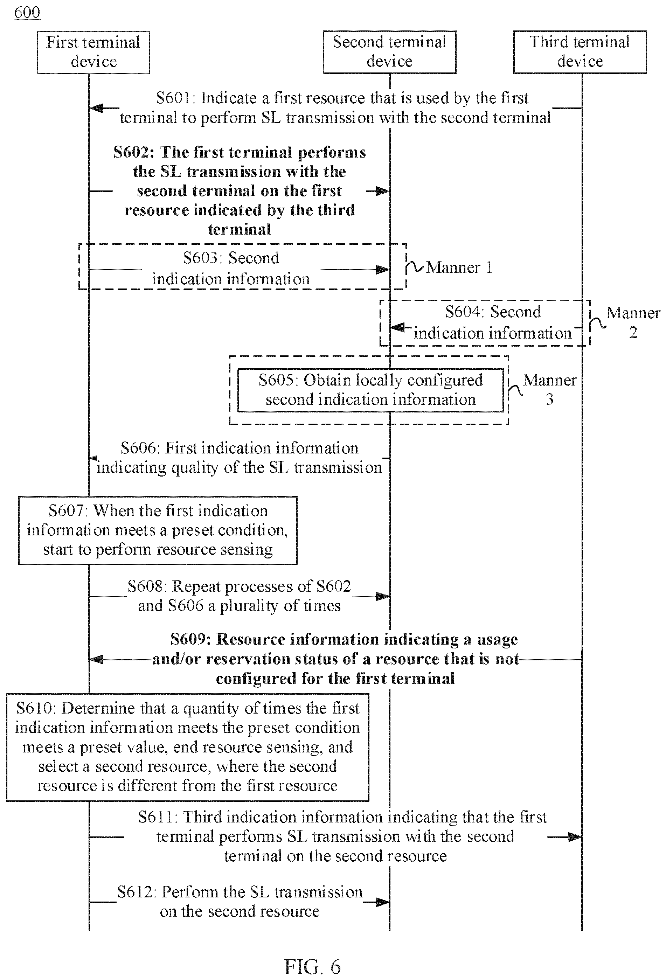

FIG. 6 is a schematic flowchart of another specific example of a resource selection method according to this application.

In this embodiment, a resource that needs to feed back an interference degree is configured for a second terminal device. Therefore, first indication information sent to a first terminal device may include a plurality of types of information for feeding back transmission quality or the interference degree.

S601 and S602 may be respectively the same as S410 and S420. For brevity, details are not described herein again.

That a second terminal device is configured with a resource for which an interference degree needs to be fed back may include the following three manners:

### Manner 1:

S603: The second terminal device receives second indication information from the first terminal device. The second indication information indicates a periodicity and/or a resource for sending a CQI by the second terminal device, or the second indication information indicates a periodicity and/or a resource for sending an RSRP by the second terminal device.

### Manner 2:

S604: The second terminal device receives second indication information from a third terminal device. The second indication information indicates a periodicity and/or a resource for sending a CQI by the second terminal device, or the second indication information indicates a periodicity and/or a resource for sending an RSRP by the second terminal device.

### Manner 3:

S605: The second terminal device obtains locally configured second indication information. The second indication information indicates a periodicity and/or a resource for sending a CQI by the second terminal device, or the second indication information indicates a periodicity and/or a resource for sending an RSRP by the second terminal device.

Because the resource that needs to back the interference degree is configured for the second terminal device, the first indication information sent to the first terminal device may include the CQI or the RSRP.

S606: The second terminal device sends the first indication information to the first terminal device. Different from S430 in FIG. 4, in this embodiment, the first indication information may be HARQ feedback information, or may be the foregoing CQI information or RSRP information.

S607: When the first indication information meets a preset condition, the first terminal device starts to perform resource sensing, where
that the first indication information meets a preset condition may be: The first indication information is a NACK; or the first indication information is a CQI, and the CQI is less than or equal to a preconfigured CQI threshold; or the first indication information is an RSRP, and the RSRP is less than or equal to a preconfigured RSRP threshold.

S608 and S609 may be respectively the same as S450 and S460. For brevity, details are not described herein again.

S610: The first terminal device determines that a quantity of times the first indication information meets the preset condition is greater than or equal to a preset value, ends resource sensing, and selects a second resource. The second resource is different from the first resource.

When the first indication information is the NACK information, the preset value may be M. When the first indication information is the CQI, and the CQI is less than or equal to the preconfigured CQI threshold, the preset value may be N. When the first indication information is the RSRP, and the RSRP is less than or equal to the preconfigured RSRP threshold, the preset value may be K. M, N, and K are positive integers, and M, N, and K may be a same value or different values based on different resource reservation intervals or resource configuration periodicities.

For example, when a quantity of times the first indication information is the NACK information is greater than or equal to M, the first terminal device ends resource sensing, and selects the second resource; or when the first indication information is the CQI, and a quantity of times the CQI is less than the preconfigured CQI threshold is greater than or equal to N, the first terminal device ends resource sensing, and selects the second resource; or when the first indication information is the RSRP, and a quantity of times the RSRP is less than the preconfigured RSRP threshold is greater than or equal to K, the first terminal device ends resource sensing, and selects the second resource. It may be understood that the foregoing prerequisites may be configured to be used independently. Alternatively, it may be configured that at least two of the prerequisites are met.

In this step, a specific process in which the first terminal device selects the second resource may be the same as that in step S470. Details are not described herein again.

S611 and S612 are respectively the same as S480 and S490 in FIG. 4. For brevity, details are not described herein again.

According to the technical solution of this application, the preset condition is set, and resource selection is performed when link interference is large, to help improve an anti-interference capability of a communication system. When quality of link transmission is good, there is no need to reselect a resource, which helps reduce energy consumption overheads.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication device may be alternatively implemented by a component (for example, a chip or a circuit) that can be disposed inside the communication device.

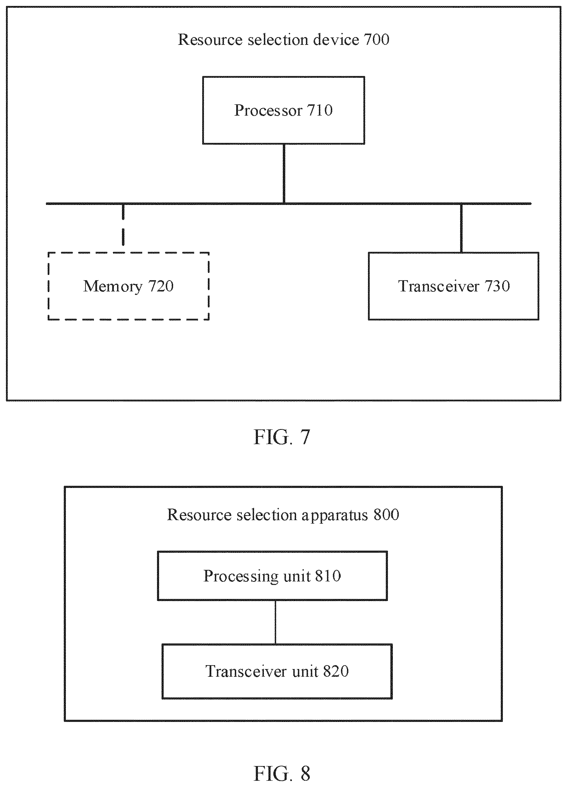

The following describes a resource selection apparatus provided in embodiments of this application in detail with reference to FIG. 7 and FIG. 8. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, a transmitting end device or a receiving end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In an actual implementation, another division manner may be used. An example in which each functional module is obtained through division based on each corresponding function is used below for description.

FIG. 7 is a schematic block diagram of a resource selection device 700 according to this application. Any device, such as the first terminal device, the second terminal device, and the third terminal device, in any one of the foregoing method 300 and method 400 may be implemented by the resource selection device shown in FIG. 7.

It should be understood that the resource selection device 700 may be a physical device, a component (for example, an integrated circuit or a chip) of a physical device, or a functional module in a physical device.

As shown in FIG. 7, the resource selection device 700 includes one or more processors 710. Optionally, the processor 710 may invoke an interface to implement a receiving function and a sending function. The interface may be a logical interface or a physical interface. This is not limited. For example, the interface may be a transceiver circuit, an input/output interface, or an interface circuit. The transceiver circuit, the input/output interface, or the interface circuit configured to implement the receiving function and the sending function may be separated, or may be integrated together. The transceiver circuit or the interface circuit may be configured to read and write code/data. Alternatively, the transceiver circuit or the interface circuit may be configured to transmit or transfer a signal.

Optionally, the interface may be implemented through a transceiver. Optionally, the resource selection device 700 may further include a transceiver 730. The transceiver 730 may be referred to as a transceiver unit, a transceiver machine, a transceiver circuit, or the like, and is configured to implement a transceiver function.

Optionally, the resource selection device 700 may further include a memory 720. A specific deployment location of the memory 720 is not specifically limited in this embodiment of this application. The memory may be integrated into the processor, or may be independent of the processor. When the resource selection device 700 does not include a memory, it is only necessary that the resource selection device 700 has a processing function, and the memory may be deployed at another location (for example, a cloud system).

The processor 710, the memory 720, and the transceiver 730 communicate with each other through an internal connection path, to transfer a control signal and/or a data signal.

It may be understood that, although not shown, resource selection device 700 may further include another apparatus, for example, an input apparatus, an output apparatus, or a battery.

Optionally, in some embodiments, the memory 720 may store execution instructions for performing the methods in embodiments of this application. The processor 710 may execute the instructions stored in the memory 720, to complete, in combination with other hardware (for example, the transceiver 730), steps to be performed in the following methods. For a specific working process and beneficial effects, refer to descriptions in the foregoing method embodiments.

The methods disclosed in embodiments of this application may be applied to the processor 710, or may be implemented by the processor 710. The processor 710 may be an integrated circuit chip, and has a signal processing capability. In an implementation process, steps in the methods may be implemented by using a hardware integrated logic circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 720 may be a volatile memory or a nonvolatile memory, or may include both a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

FIG. 8 is a schematic block diagram of a resource selection apparatus 800 according to this application.

Optionally, a specific form of the resource selection apparatus 800 may be a general-purpose computer device or a chip in a general-purpose computer device. This is not limited in this embodiment of this application. As shown in FIG. 8, the resource selection apparatus includes a processing unit 810 and a transceiver unit 820.

Specifically, the resource selection apparatus 800 may be any device in this application, and may implement a function that can be implemented by the device. It should be understood that the resource selection apparatus 800 may be a physical device, a component (for example, an integrated circuit or a chip) of a physical device, or a functional module in a physical device.

In a possible design, the resource selection apparatus 800 may be the first terminal device (for example, the terminal device 102) in the foregoing method embodiments, or may be a chip configured to implement a function of the first terminal device (for example, the terminal device 102) in the foregoing method embodiments.

For example, the transceiver unit is configured to receive first indication information from a second terminal device, where the first indication information indicates quality of sidelink SL transmission between the first terminal device and the second terminal device on a first resource, and the first resource is a resource indicated by a third terminal device; and the processing unit is configured to: determine that a quantity of times the first indication information meets a preset condition is greater than or equal to a preset value, and select a second resource, where the second resource is different from the first resource.

Optionally, the transceiver unit is further configured to send second indication information to the second terminal device. The second indication information indicates a periodicity and/or a resource for sending a CQI by the second terminal device, or the second indication information indicates a periodicity and/or a resource for sending an RSRP by the second terminal device.

It should be further understood that when the resource selection apparatus 800 is the first terminal device (for example, the terminal device 102), the transceiver unit 820 in the resource selection apparatus 800 may be implemented by using a communication interface (for example, a transceiver or an input/output interface), and the processing unit 810 in the resource selection apparatus 800 may be implemented by using at least one processor, for example, may correspond to the processor 710 shown in FIG. 7.

Optionally, the resource selection apparatus 800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein again.

In another possible design, the resource selection apparatus 800 may be the second terminal device (for example, the terminal device 103) in the foregoing method embodiments, or may be a chip configured to implement a function of the second terminal device (for example, the terminal device 103) in the foregoing method embodiments.

For example, the transceiver unit is configured to send first indication information to a first terminal device, where the first indication information indicates quality of SL transmission between the first terminal device and the second terminal device on a first resource, and the first resource is a resource indicated by a third terminal device; and the transceiver unit is further configured to perform SL transmission with the first terminal device on a second resource, where the second resource is a resource selected after the first terminal device determines that a quantity of times the first indication information meets a preset condition is greater than or equal to a preset value, and the second resource is different from the first resource.

Optionally, the transceiver unit is further configured to obtain second indication information. The second indication information indicates a periodicity and/or a resource for sending a CQI by the second terminal device, or the second indication information indicates a periodicity and/or a resource for sending an RSRP by the second terminal device.

It should be further understood that when the resource selection apparatus 800 is the second terminal device, the transceiver unit 820 in the resource selection apparatus 800 may be implemented by using a communication interface (for example, a transceiver or an input/output interface), for example, may correspond to the transceiver 730 shown in FIG. 7. The processing unit 810 in the resource selection apparatus 800 may be implemented by using at least one processor, for example, may correspond to the processor 710 shown in FIG. 7.

Optionally, the resource selection apparatus 800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein again.

In still another possible design, the resource selection apparatus 800 may be the third terminal device (for example, the terminal device 104) in the foregoing method embodiments, or may be a chip configured to implement a function of the third terminal device (for example, the terminal device 104) in the foregoing method embodiments.

For example, the transceiver unit is configured to send first information to a first terminal device, where the first information includes a first resource, and the first resource is used by the first terminal device to perform SL transmission with a second terminal device; and the transceiver unit is further configured to receive third indication information from the first terminal device, where the third indication information indicates that the first terminal device performs SL transmission with the second terminal device on a second resource, the second resource is a resource selected by the first terminal device, and the second resource is different from the first resource.

Optionally, the transceiver unit is further configured to send second indication information to the second terminal device. The second indication information indicates a periodicity and/or a resource for sending a CQI by the second terminal device, or the second indication information indicates a periodicity and/or a resource for sending an RSRP by the second terminal device.

It should be further understood that when the resource selection apparatus 800 is the third terminal device, the transceiver unit 820 in the resource selection apparatus 800 may be implemented by using a communication interface (for example, a transceiver or an input/output interface), for example, may correspond to the transceiver 730 shown in FIG. 7. The processing unit 810 in the resource selection apparatus 800 may be implemented by using at least one processor, for example, may correspond to the processor 710 shown in FIG. 7.

Optionally, the resource selection apparatus 800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein again.

In addition, in this application, the resource selection apparatus 800 is presented in a form of functional modules. The "module" herein may be an application specific integrated circuit ASIC, a circuit, a processor and a memory that execute one or more software or firmware programs, an integrated logic circuit, and/or another device that can provide the foregoing functions. In a simple embodiment, a person skilled in the art may figure out that the apparatus 800 may in a form shown in FIG. 8. The processing unit 810 may be implemented by using the processor 710 shown in FIG. 7. Optionally, if the resource selection device shown in FIG. 7 includes the memory 720, the processing unit 810 may be implemented by using the processor 710 and the memory 720. The transceiver unit 820 may be implemented by using the transceiver 730 shown in FIG. 7. The transceiver 730 includes a receiving function and a sending function. Specifically, the processor is implemented by executing a computer program stored in the memory. Optionally, when the apparatus 800 is a chip, a function and/or an implementation process of the transceiver unit 820 may be alternatively implemented by using a pin, a circuit, or the like. Optionally, the memory may be a storage unit in the chip, for example, a register or a cache. Alternatively, the storage unit may be a storage unit in the resource selection apparatus but outside the chip, for example, the memory 720 shown in FIG. 7, or may be a storage unit that is deployed in another system or device but not in the computer device.

Aspects or features of this application may be implemented as a method, an apparatus, or a product that uses standard programming and/or engineering technologies. For example, a computer-readable medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to various other media that can store, include, and/or carry instructions and/or data.

Based on the methods provided in embodiments of this application, this application further provides a computer program product. The computer program product includes a computer program or a set of instructions. When the computer program is run on a computer or the set of instructions are executed on a computer, the computer is enabled to perform the method according to any one of the embodiments shown in FIG. 3, FIG. 4, and FIG. 6.

Based on the methods provided in embodiments of this application, this application further provides a computer-readable storage medium. The computer-readable storage medium stores a program or a set of instructions. When the program is run on a computer or the set of instructions are executed on a computer, the computer is enabled to perform the method according to any one of the embodiments shown in FIG. 3, FIG. 4, and FIG. 6.

Based on the methods provided in embodiments of this application, this application further provides a communication system. The communication system includes the foregoing apparatus or device.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on a signal having one or more data packets (for example, data from two components interacting with another component in a local system, a distributed system, and/or across a network such as the Internet interacting with other systems by using the signal).

It should be further understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between associated objects.

It should be further understood that numbers "first", "second", and the like are introduced in embodiments of this application merely to distinguish between different objects, for example, distinguish between different "information", "devices", or "units". Understanding of a specific object and a correspondence between different objects should be determined based on functions and internal logic thereof, and should not be constructed as any limitation on the implementation processes of embodiments of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource selection method, comprising:
receiving (S310), by a first terminal device, first indication information from a second terminal device, wherein the first indication information indicates quality of sidelink, SL transmission between the first terminal device and the second terminal device on a first resource, and the first resource is a resource indicated by a third terminal device; and
determining (S320), by the first terminal device, that a quantity of times the first indication information meets a preset condition is greater than or equal to a preset value, and selecting a second resource, wherein the second resource is different from the first resource,
wherein the selecting, by the first terminal device, a second resource comprises:
determining, by the first terminal device, a first resource sensing window and a first resource selection window;
determining, by the first terminal device, a candidate resource set in the first resource selection window based on a sensing result in the first resource sensing window, wherein the sensing result indicates a usage and/or reservation status of a resource in the first resource selection window; and
determining, by the first terminal device, the second resource from the candidate resource set, wherein the method further comprises:
receiving (S460), by the first terminal device, resource information from the third terminal device, wherein the resource information comprises a usage and/or reservation status of a resource that is in the first resource selection window and that is not configured for the first terminal device; and
the determining, by the first terminal device, a candidate resource set in the first resource selection window based on a sensing result in the first resource sensing window comprises:
determining, by the first terminal device, the candidate resource set in the first resource selection window based on the sensing result and the resource information.

2. The method according to claim 1, wherein that the first indication information meets a preset condition comprises at least one of the following:
the first indication information is a NACK; or
the first indication information is a CQI, and the CQI is less than or equal to a preconfigured CQI threshold; or
the first indication information is an RSRP, and the RSRP is less than or equal to a preconfigured RSRP threshold.

3. The method according to claim 1 or 2, wherein the method further comprises:
sending, by the first terminal device, second indication information to the second terminal device, wherein the second indication information indicates a periodicity and/or a resource for sending the CQI by the second terminal device, or
the second indication information indicates a periodicity and/or a resource for sending the RSRP by the second terminal device.

4. A resource selection method, comprising:
sending (S410), by a third terminal device, first information to a first terminal device, wherein the first information indicates a first resource, and the first resource is used by the first terminal device to perform SL transmission with a second terminal device; and
receiving (S480), by the third terminal device, third indication information from the first terminal device, wherein the third indication information indicates that the first terminal device performs SL transmission with the second terminal device on a second resource, the second resource is a resource selected after the first terminal device determines that a quantity of times first indication information meets a preset condition is greater than or equal to a preset value, the first indication information indicates quality of the SL transmission between the first terminal device and the second terminal device on the first resource, and the second resource is different from the first resource,
wherein the method further comprises:
sending (S460), by the third terminal device, resource information to the first terminal device, wherein the resource information comprises a usage and/or reservation status of a resource that is in a first resource selection window and that is not configured for the first terminal device, and the first resource selection window is determined by the first terminal device.

5. The method according to claim 4, wherein the method further comprises:
sending (S604), by the third terminal device, second indication information to the second terminal device, wherein the second indication information indicates a periodicity and/or a resource for sending a CQI by the second terminal device, or
the second indication information indicates a periodicity and/or a resource for sending an RSRP by the second terminal device.

6. A resource selection apparatus (800), comprising:
a transceiver unit (820), configured to receive first indication information from a second terminal device, wherein the first indication information indicates quality of sidelink SL transmission between a first terminal device and the second terminal device on a first resource, and the first resource is a resource indicated by a third terminal device; and
a processing unit (810), configured to: determine that a quantity of times the first indication information meets a preset condition is greater than or equal to a preset value, and select a second resource, wherein the second resource is different from the first resource,
wherein the processing unit (810) is specifically configured to:
determine a first resource sensing window and a first resource selection window;
determine a candidate resource set in the first resource selection window based on a sensing result in the first resource sensing window, wherein the sensing result indicates a usage and/or reservation status of a resource in the first resource selection window; and
determine the second resource from the candidate resource set;
wherein the transceiver unit (820) is further configured to receive resource information from the third terminal device, wherein the resource information comprises a usage and/or reservation status of a resource that is in the first resource selection window and that is not configured for the first terminal device; and
the processing unit (810) is specifically configured to determine the candidate resource set in the first resource selection window based on the sensing result and the resource information.

7. The apparatus (800) according to claim 6, wherein that the first indication information meets a preset condition comprises at least one of the following:
the first indication information is a NACK; or
the first indication information is a CQI, and the CQI is less than or equal to a preconfigured CQI threshold; or
the first indication information is an RSRP, and the RSRP is less than or equal to a preconfigured RSRP threshold.

8. A resource selection apparatus (800), comprising:
a transceiver unit (820), configured to send first information to a first terminal device, wherein the first information indicates a first resource, and the first resource is used by the first terminal device to perform SL transmission with a second terminal device; and
the transceiver unit (820) is further configured to receive third indication information from the first terminal device, wherein the third indication information indicates that the first terminal device performs SL transmission with the second terminal device on a second resource, the second resource is a resource selected after the first terminal device determines that a quantity of times first indication information meets a preset condition is greater than or equal to a preset value, the first indication information indicates quality of the SL transmission between the first terminal device and the second terminal device on the first resource, and the second resource is different from the first resource,
the transceiver unit (820) is further configured to send resource information to the first terminal device, wherein the resource information comprises a usage and/or reservation status of a resource that is in a first resource selection window and that is not configured for the first terminal device, and the first resource selection window is determined by the first terminal device.

9. A computer-readable storage medium, wherein the computer-readable storage medium stores a computer program or instructions, and when a processor executes the computer program or the instructions, the method according to any one of claims 1 to 3 is performed.

10. A computer program product comprising instructions, wherein when the computer program product is run on a computer, the method according to any one of claims 1 to 3 is performed.

## Patentansprüche

1. Ressourcenauswahlverfahren, umfassend:
Empfangen (S310), durch eine erste Endvorrichtung, von ersten Anzeigeinformationen von einer zweiten Endvorrichtung, wobei die ersten Anzeigeinformationen die Qualität einer Sidelink-, SL-Übertragung zwischen der ersten Endvorrichtung und der zweiten Endvorrichtung auf einer ersten Ressource anzeigen, und die erste Ressource eine Ressource ist, die durch eine dritte Endvorrichtung angezeigt wird; und
Bestimmen (S320), durch die erste Endvorrichtung, dass eine Anzahl von Malen, die die ersten Anzeigeinformationen eine voreingestellte Bedingung erfüllen, größer oder gleich einem voreingestellten Wert ist, und Auswählen einer zweiten Ressource, wobei die zweite Ressource von der ersten Ressource verschieden ist,
wobei das Auswählen, durch die erste Endvorrichtung, einer zweiten Ressource umfasst:
Bestimmen, durch die erste Endvorrichtung, eines ersten Ressourcenabfühlfensters und eines ersten Ressourcenauswahlfensters;
Bestimmen, durch die erste Endvorrichtung, einer Kandidatenressourcenmenge in dem ersten Ressourcenauswahlfenster basierend auf einem Abfühlergebnis in dem ersten Ressourcenabfühlfenster, wobei das Abfühlergebnis einen Nutzungs- und/oder Reservierungsstatus einer Ressource in dem ersten Ressourcenauswahlfenster anzeigt; und
Bestimmen, durch die erste Endvorrichtung, der zweiten Ressource aus der Kandidatenressourcenmenge, wobei das Verfahren ferner umfasst:
Empfangen (S460), durch die erste Endvorrichtung, von Ressourceninformationen von der dritten Endvorrichtung, wobei die Ressourceninformationen einen Nutzungs- und/oder Reservierungsstatus einer Ressource umfassen, die sich in dem ersten Ressourcenauswahlfenster befindet und die nicht für die erste Endvorrichtung konfiguriert ist; und
das Bestimmen, durch die erste Endvorrichtung, einer Kandidatenressourcenmenge in dem ersten Ressourcenauswahlfenster basierend auf einem Abfühlergebnis in dem ersten Ressourcenabfühlfenster umfasst:
Bestimmen, durch die erste Endvorrichtung, der Kandidatenressourcenmenge in dem ersten Ressourcenauswahlfenster basierend auf dem Abfühlergebnis und den Ressourceninformationen.

2. Verfahren nach Anspruch 1, wobei, dass die ersten Anzeigeinformationen eine voreingestellte Bedingung erfüllen, mindestens eines von Folgendem umfasst:
die ersten Anzeigeinformationen ein NACK sind; oder
die ersten Anzeigeinformationen ein CQI sind und der CQI kleiner oder gleich einem vorkonfigurierten CQI-Schwellenwert ist; oder
die ersten Anzeigeinformationen ein RSRP sind und der RSRP kleiner oder gleich einem vorkonfigurierten RSRP-Schwellenwert ist.

3. Verfahren nach Anspruch 1 oder 2, wobei das Verfahren ferner umfasst:
Senden, durch die erste Endvorrichtung, von zweiten Anzeigeinformationen an die zweite Endvorrichtung, wobei die zweiten Anzeigeinformationen eine Periodizität und/oder eine Ressource zum Senden des CQI durch die zweite Endvorrichtung anzeigen, oder
die zweiten Anzeigeinformationen eine Periodizität und/oder eine Ressource zum Senden des RSRP durch die zweite Endvorrichtung anzeigen.

4. Ressourcenauswahlverfahren, umfassend:
Senden (S410), durch eine dritte Endvorrichtung, von ersten Informationen an eine erste Endvorrichtung, wobei die ersten Informationen eine erste Ressource anzeigen und die erste Ressource durch die erste Endvorrichtung verwendet wird, um eine SL-Übertragung mit einer zweiten Endvorrichtung durchzuführen; und
Empfangen (S480), durch die dritte Endvorrichtung, von dritten Anzeigeinformationen von der ersten Endvorrichtung, wobei die dritten Anzeigeinformationen anzeigen, dass die erste Endvorrichtung eine SL-Übertragung mit der zweiten Endvorrichtung auf einer zweiten Ressource durchführt, wobei die zweite Ressource eine Ressource ist, die ausgewählt wird, nachdem die erste Endvorrichtung bestimmt, dass eine Anzahl von Malen, die erste Anzeigeinformationen eine voreingestellte Bedingung erfüllen, größer oder gleich einem voreingestellten Wert ist, wobei die ersten Anzeigeinformationen die Qualität der SL-Übertragung zwischen der ersten Endvorrichtung und der zweiten Endvorrichtung auf der ersten Ressource anzeigen, und die zweite Ressource von der ersten Ressource verschieden ist,
wobei das Verfahren ferner umfasst:
Senden (S460), durch die dritte Endvorrichtung, von Ressourceninformationen an die erste Endvorrichtung, wobei die Ressourceninformationen einen Nutzungs- und/oder Reservierungsstatus einer Ressource umfassen, die sich in einem ersten Ressourcenauswahlfenster befindet und die nicht für die erste Endvorrichtung konfiguriert ist, und das erste Ressourcenauswahlfenster durch die erste Endvorrichtung bestimmt wird.

5. Verfahren nach Anspruch 4, wobei das Verfahren ferner umfasst:
Senden (S604), durch die dritte Endvorrichtung, von zweiten Anzeigeinformationen an die zweite Endvorrichtung, wobei die zweiten Anzeigeinformationen eine Periodizität und/oder eine Ressource zum Senden eines CQI durch die zweite Endvorrichtung anzeigen, oder
die zweiten Anzeigeinformationen eine Periodizität und/oder eine Ressource zum Senden eines RSRP durch die zweite Endvorrichtung anzeigen.

6. Ressourcenauswahlvorrichtung (800), umfassend:
eine Transceiver-Einheit (820), die konfiguriert ist zum Empfangen von ersten Anzeigeinformationen von einer zweiten Endvorrichtung, wobei die ersten Anzeigeinformationen die Qualität einer Sidelink-SL-Übertragung zwischen einer ersten Endvorrichtung und der zweiten Endvorrichtung auf einer ersten Ressource anzeigen, und die erste Ressource eine Ressource ist, die durch eine dritte Endvorrichtung angezeigt wird; und
eine Verarbeitungseinheit (810), die konfiguriert ist zum:
Bestimmen, dass eine Anzahl von Malen, die die ersten Anzeigeinformationen eine voreingestellte Bedingung erfüllen, größer oder gleich einem voreingestellten Wert ist, und Auswählen einer zweiten Ressource, wobei die zweite Ressource von der ersten Ressource verschieden ist,
wobei die Verarbeitungseinheit (810) speziell konfiguriert ist zum:
Bestimmen eines ersten Ressourcenabfühlfensters und eines ersten Ressourcenauswahlfensters;
Bestimmen einer Kandidatenressourcenmenge in dem ersten Ressourcenauswahlfenster basierend auf einem Abfühlergebnis in dem ersten Ressourcenabfühlfenster, wobei das Abfühlergebnis einen Nutzungs- und/oder Reservierungsstatus einer Ressource in dem ersten Ressourcenauswahlfenster anzeigt; und
Bestimmen der zweiten Ressource aus der Kandidatenressourcenmenge;
wobei die Transceiver-Einheit (820) ferner konfiguriert ist zum Empfangen von Ressourceninformationen von der dritten Endvorrichtung, wobei die Ressourceninformationen einen Nutzungs- und/oder Reservierungsstatus einer Ressource umfassen, die sich in dem ersten Ressourcenauswahlfenster befindet und die nicht für die erste Endvorrichtung konfiguriert ist; und
die Verarbeitungseinheit (810) speziell konfiguriert ist zum Bestimmen der Kandidatenressourcenmenge in dem ersten Ressourcenauswahlfenster basierend auf dem Abfühlergebnis und den Ressourceninformationen.

7. Vorrichtung (800) nach Anspruch 6, wobei, dass die ersten Anzeigeinformationen eine voreingestellte Bedingung erfüllen, mindestens eines von Folgendem umfasst:
die ersten Anzeigeinformationen ein NACK sind; oder
die ersten Anzeigeinformationen ein CQI sind und der CQI kleiner oder gleich einem vorkonfigurierten CQI-Schwellenwert ist; oder
die ersten Anzeigeinformationen ein RSRP sind und der RSRP kleiner oder gleich einem vorkonfigurierten RSRP-Schwellenwert ist.

8. Ressourcenauswahlvorrichtung (800), umfassend:
eine Transceiver-Einheit (820), die konfiguriert ist zum Senden von ersten Informationen an eine erste Endvorrichtung, wobei die ersten Informationen eine erste Ressource anzeigen und die erste Ressource durch die erste Endvorrichtung verwendet wird, um eine SL-Übertragung mit einer zweiten Endvorrichtung durchzuführen; und
die Transceiver-Einheit (820) ferner konfiguriert ist zum Empfangen von dritten Anzeigeinformationen von der ersten Endvorrichtung, wobei die dritten Anzeigeinformationen anzeigen, dass die erste Endvorrichtung eine SL-Übertragung mit der zweiten Endvorrichtung auf einer zweiten Ressource durchführt, wobei die zweite Ressource eine Ressource ist, die ausgewählt wird, nachdem die erste Endvorrichtung bestimmt, dass eine Anzahl von Malen, die erste Anzeigeinformationen eine voreingestellte Bedingung erfüllen, größer oder gleich einem voreingestellten Wert ist, wobei die ersten Anzeigeinformationen die Qualität der SL-Übertragung zwischen der ersten Endvorrichtung und der zweiten Endvorrichtung auf der ersten Ressource anzeigen, und die zweite Ressource von der ersten Ressource verschieden ist,
die Transceiver-Einheit (820) ferner konfiguriert ist zum Senden von Ressourceninformationen an die erste Endvorrichtung, wobei die Ressourceninformationen einen Nutzungs- und/oder Reservierungsstatus einer Ressource umfassen, die sich in einem ersten Ressourcenauswahlfenster befindet und die nicht für die erste Endvorrichtung konfiguriert ist, und das erste Ressourcenauswahlfenster durch die erste Endvorrichtung bestimmt wird.

9. Computerlesbares Speichermedium, wobei das computerlesbare Speichermedium ein Computerprogramm oder Anweisungen speichert, und wenn ein Prozessor das Computerprogramm oder die Anweisungen ausführt, das Verfahren nach einem der Ansprüche 1 bis 3 durchgeführt wird.

10. Computerprogrammprodukt, umfassend Anweisungen, wobei, wenn das Computerprogrammprodukt auf einem Computer ausgeführt wird, das Verfahren nach einem der Ansprüche 1 bis 3 durchgeführt wird.

## Revendications

1. Procédé de sélection de ressource, comprenant :
la réception (S310), par un premier dispositif terminal, de premières informations d'indication à partir d'un deuxième dispositif terminal, dans lequel les premières informations d'indication indiquent une qualité de transmission de liaison latérale, SL, entre le premier dispositif terminal et le deuxième dispositif terminal sur une première ressource, et la première ressource est une ressource indiquée par un troisième dispositif terminal ; et
la détermination (S320), par le premier dispositif terminal, qu'un nombre de fois où les premières informations d'indication satisfont à une condition prédéfinie est supérieur ou égal à une valeur prédéfinie, et la sélection d'une seconde ressource, dans lequel la seconde ressource est différente de la première ressource,
dans lequel la sélection, par le premier dispositif terminal, d'une seconde ressource comprend :
la détermination, par le premier dispositif terminal, d'une première fenêtre de détection de ressource et d'une première fenêtre de sélection de ressource ;
la détermination, par le premier dispositif terminal, d'un ensemble de ressources candidates dans la première fenêtre de sélection de ressource sur la base d'un résultat de détection dans la première fenêtre de détection de ressource, dans lequel le résultat de détection indique un état d'utilisation et/ou de réservation d'une ressource dans la première fenêtre de sélection de ressource ; et
la détermination, par le premier dispositif terminal, de la seconde ressource à partir de l'ensemble de ressources candidates, dans lequel le procédé comprend en outre :
la réception (S460), par le premier dispositif terminal, d'informations de ressource à partir du troisième dispositif terminal, dans lequel les informations de ressource comprennent un état d'utilisation et/ou de réservation d'une ressource qui se trouve dans la première fenêtre de sélection de ressource et qui n'est pas configurée pour le premier dispositif terminal ; et
la détermination, par le premier dispositif terminal, d'un ensemble de ressources candidates dans la première fenêtre de sélection de ressource sur la base d'un résultat de détection dans la première fenêtre de détection de ressource comprend :
la détermination, par le premier dispositif terminal, de l'ensemble de ressources candidates dans la première fenêtre de sélection de ressource sur la base du résultat de détection et des informations de ressource.

2. Procédé selon la revendication 1, dans lequel le fait que les premières informations d'indication satisfont à une condition prédéfinie comprend au moins l'un des éléments suivants :
les premières informations d'indication sont un NACK ; ou
les premières informations d'indication sont un CQI, et le CQI est inférieur ou égal à un seuil de CQI préconfiguré ; ou
les premières informations d'indication sont un RSRP, et le RSRP est inférieur ou égal à un seuil de RSRP préconfiguré.

3. Procédé selon la revendication 1 ou 2, dans lequel le procédé comprend en outre :
l'envoi, par le premier dispositif terminal, de deuxièmes informations d'indication au deuxième dispositif terminal, dans lequel les deuxièmes informations d'indication indiquent une périodicité et/ou une ressource pour l'envoi du CQI par le deuxième dispositif terminal, ou
les deuxièmes informations d'indication indiquent une périodicité et/ou une ressource pour l'envoi du RSRP par le deuxième dispositif terminal.

4. Procédé de sélection de ressource, comprenant :
l'envoi (S410), par un troisième dispositif terminal, de premières informations à un premier dispositif terminal, dans lequel les premières informations indiquent une première ressource, la première ressource est utilisée par le premier dispositif terminal pour réaliser une transmission SL avec un deuxième dispositif terminal ; et
la réception (S480), par le troisième dispositif terminal, de troisièmes informations d'indication à partir du premier dispositif terminal, dans lequel les troisièmes informations d'indication indiquent que le premier dispositif terminal réalise une transmission SL avec le deuxième dispositif terminal sur une seconde ressource, la seconde ressource est une ressource sélectionnée après que le premier dispositif terminal a déterminé qu'un nombre de fois où les premières informations d'indication satisfont à une condition prédéfinie est supérieur ou égal à une valeur prédéfinie, les premières informations d'indication indiquent une qualité de la transmission SL entre le premier dispositif terminal et le deuxième dispositif terminal sur la première ressource, et la seconde ressource est différente de la première ressource,
dans lequel le procédé comprend en outre :
l'envoi (S460), par le troisième dispositif terminal, d'informations de ressource au premier dispositif terminal, dans lequel les informations de ressource comprennent un état d'utilisation et/ou de réservation d'une ressource qui se trouve dans une première fenêtre de sélection de ressource et qui n'est pas configurée pour le premier dispositif terminal, et la première fenêtre de sélection de ressource est déterminée par le premier dispositif terminal.

5. Procédé selon la revendication 4, dans lequel le procédé comprend en outre :
l'envoi (S604), par le troisième dispositif terminal, de deuxièmes informations d'indication au deuxième dispositif terminal, dans lequel les deuxièmes informations d'indication indiquent une périodicité et/ou une ressource pour l'envoi d'un CQI par le deuxième dispositif terminal, ou
les deuxièmes informations d'indication indiquent une périodicité et/ou une ressource pour l'envoi d'un RSRP par le deuxième dispositif terminal.

6. Appareil de sélection de ressource (800), comprenant :
une unité d'émetteur-récepteur (820), configurée pour recevoir des premières informations d'indication à partir d'un deuxième dispositif terminal, dans lequel les premières informations d'indication indiquent une qualité de transmission de liaison latérale, SL, entre un premier dispositif terminal et le deuxième dispositif terminal sur une première ressource, et la première ressource est une ressource indiquée par un troisième dispositif terminal ; et
une unité de traitement (810), configurée pour : déterminer qu'un nombre de fois où les premières informations d'indication satisfont à une condition prédéfinie est supérieur ou égal à une valeur prédéfinie, et sélectionner une seconde ressource, dans lequel la seconde ressource est différente de la première ressource,
dans lequel l'unité de traitement (810) est spécifiquement configurée pour :
déterminer une première fenêtre de détection de ressource et une première fenêtre de sélection de ressource ;
déterminer un ensemble de ressources candidates dans la première fenêtre de sélection de ressource sur la base d'un résultat de détection dans la première fenêtre de détection de ressource, dans lequel le résultat de détection indique un état d'utilisation et/ou de réservation d'une ressource dans la première fenêtre de sélection de ressource ; et
déterminer la seconde ressource à partir de l'ensemble de ressources candidates ;
dans lequel l'unité d'émetteur-récepteur (820) est en outre configurée pour recevoir des informations de ressource à partir du troisième dispositif terminal, dans lequel les informations de ressource comprennent un état d'utilisation et/ou de réservation d'une ressource qui se trouve dans la première fenêtre de sélection de ressource et qui n'est pas configurée pour le premier dispositif terminal ; et
l'unité de traitement (810) est spécifiquement configurée pour déterminer l'ensemble de ressources candidates dans la première fenêtre de sélection de ressource sur la base du résultat de détection et des informations de ressource.

7. Appareil (800) selon la revendication 6, dans lequel le fait que les premières informations d'indication satisfont à une condition prédéfinie comprend au moins l'un des éléments suivants :
les premières informations d'indication sont un NACK ; ou
les premières informations d'indication sont un CQI, et le CQI est inférieur ou égal à un seuil de CQI préconfiguré ; ou
les premières informations d'indication sont un RSRP, et le RSRP est inférieur ou égal à un seuil de RSRP préconfiguré.

8. Appareil de sélection de ressource (800), comprenant :
une unité d'émetteur-récepteur (820), configurée pour envoyer des premières informations à un premier dispositif terminal, dans lequel les premières informations indiquent une première ressource, la première ressource est utilisée par le premier dispositif terminal pour réaliser une transmission SL avec un deuxième dispositif terminal ; et
l'unité d'émetteur-récepteur (820) est en outre configurée pour recevoir des troisièmes informations d'indication à partir du premier dispositif terminal, dans lequel les troisièmes informations d'indication indiquent que le premier dispositif terminal réalise une transmission SL avec le deuxième dispositif terminal sur une seconde ressource, la seconde ressource est une ressource sélectionnée après que le premier dispositif terminal a déterminé qu'un nombre de fois où les premières informations d'indication satisfont à une condition prédéfinie est supérieur ou égal à une valeur prédéfinie, les premières informations d'indication indiquent une qualité de la transmission SL entre le premier dispositif terminal et le deuxième dispositif terminal sur la première ressource, et la seconde ressource est différente de la première ressource,
l'unité d'émetteur-récepteur (820) est en outre configurée pour envoyer des informations de ressource au premier dispositif terminal, dans lequel les informations de ressource comprennent un état d'utilisation et/ou de réservation d'une ressource qui se trouve dans une première fenêtre de sélection de ressource et qui n'est pas configurée pour le premier dispositif terminal, et la première fenêtre de sélection de ressource est déterminée par le premier dispositif terminal.

9. Support de stockage lisible par ordinateur, dans lequel le support de stockage lisible par ordinateur stocke un programme informatique ou des instructions, et lorsqu'un processeur exécute le programme informatique ou les instructions, le procédé selon l'une quelconque des revendications 1 à 3 est réalisé.

10. Produit de programme informatique comprenant des instructions, dans lequel lorsque le produit de programme informatique est exécuté sur un ordinateur, le procédé selon l'une quelconque des revendications 1 à 3 est réalisé.
